# EUROPEAN PATENT SPECIFICATION

(11) **EP 4 119 013 B1**
(45) Date of publication and mention of the grant of the patent: **24.04.2024**
(21) Application number: 22184669.4
(22) Date of filing: 13.07.2022
(51) Int. Cl.: A47J 31/46, A47J 31/52

(54) **BREWED BEVERAGE-MAKING MACHINE**
GETRÄNKEZUBEREITUNGSMASCHINE
APPAREIL A INFUSIONS POUR BOISSONS

(30) Priority: 14.07.2021 IT 202100018644
(43) Date of publication of application: 18.01.2023
(73) Proprietor: Cimbali Group S.p.A., 20082 Binasco (MI) (IT)
(72) Inventor: CASALI, Andrea, 20082 Binasco MI (IT)
(74) Representative: Perani & Partners S.p.A.

(56) References cited:
- WO-A1-2016/034255
- WO-A2-2011/151703
- DE-U1-202008 016 377

## Description

### Technical field

The present invention relates to a machine for brewed beverages, such as coffee, tea or the like.

### Background art

It is known in the state of the art that water temperature is a fundamental parameter for the correct preparation of brewed beverages. Brewed beverage-making machines comprising devices capable of controlling the temperature of the water used for the preparation of such beverages are therefore known in the state of the art.

Examples of such devices or machines can be found in documents EP0422738, EP1969979, WO 2011/151703 and WO2015056241.

Document EP0422738 describes an apparatus capable of regulating small amounts of water by means of two electrovalves that intercept the hot and cold water ducts.

Document EP 1969979 also shows a device characterised by the presence of two ducts, one for conveying hot water and the other for cold water. In particular, the two ducts of EP1969979 are intercepted by two distinct valves controlled to stop and allow the passage of water through the ducts. This document provides instructions on how to mix two distinct flows of cold water and hot water so as to obtain a flow of water at a predetermined temperature.

Finally, document WO2015056241 shows a brewed beverage-making machine comprising a mixing unit, a supply line, a first and a second duct connected to the mixing unit and the supply line. The first and second known ducts are configured to receive cold water from the supply line and send cold or hot water to the mixing unit. The known machine further comprises a pump configured to receive cold water from an external network and supply it to the supply line.

Furthermore, in the prior art, a flow meter is connected to the supply line and placed downstream of the pump, while a heating element is connected to the second duct and is configured to receive cold water from the same duct and supply hot water to the mixing unit.

### Problems of the prior art

However, the flow rate of the first and second ducts of the known art is not defined, and its determination would require the arrangement of sensor on the ducts. Such sensors would allow to obtain a control on the mixing of cold and hot water.

### Summary of the invention

In this context, the technical task underlying the present invention is to propose brewed beverage-making machine which overcomes the drawbacks of the prior art.

In particular, it is an object of the present invention to provide a brewed beverage-making machine capable of dispensing water within a temperature range.

It is also an object of the present invention to provide a machine which improves the quality of brewed beverages drinks and which is cheaper.

It is a further object of the present invention to suggest a method for the preparation of brewed beverages that may be performed either with an automatic coffee machine or with a traditional coffee machine (with hand-loaded coffee per dispensing).

The specified technical task and the specified purposes are substantially achieved by a brewed beverage-making machine and a method for the preparation of brewed beverages comprising the technical features set forth in one or more of the claims disclosed herein.

### Advantages of the invention

The present invention solves the technical problem. In fact, it is possible to make a brewed beverage-making machine that autonomously regulates the mixing of cold and hot water.

It is also possible to make a more cost-effective and versatile brewed beverage-making machine.

It is further possible to manufacture a brewed beverage-making machine that automatically controls the supply of water according to the contents of the brewing chamber.

### BRIEF DESCRIPTION OF THE DRAWINGS

Further features and advantages of the present invention will be made clearer by the indicative, and therefore non-limiting, description of a preferred, but not exclusive, embodiment of a brewed beverage-making machine illustrated with reference to the accompanying Figures:

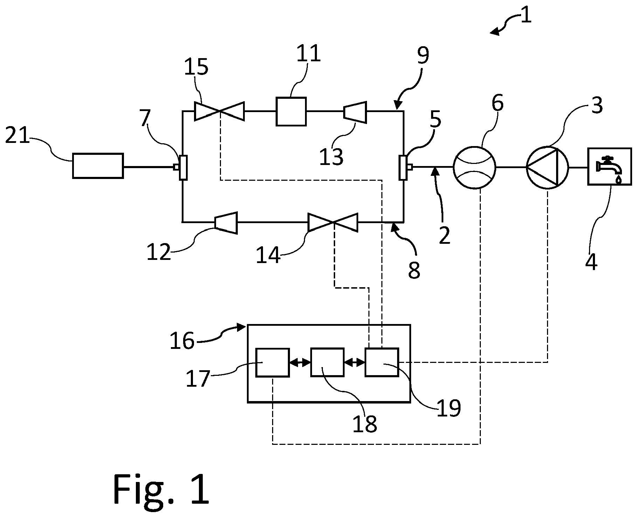

- Figure 1 schematically shows a brewed beverage-making machine in accordance with the present invention.

### DETAILED DESCRIPTION

With particular reference to the appended Figures, number 1 denotes a brewed beverage-making machine object of the present invention.

The machine 1 comprises a supply line 2 and a pump 3 configured to receive water at a first temperature from an external source 4 and supply such water at the first temperature to the supply line 2. In particular, said supply line 2 has a branch point 5. The external source 4 may comprise a tank or a water supply network adapted to supply the water at the first temperature to the pump 3. The pump 3 may be configured to receive water at the first temperature from the water supply network or from the tank.

The machine 1 also comprises a flow meter 6 arranged on the supply line 2 between the pump 3 and the branch point 5. Preferably, the flow meter 6 is configured to detect the flow rate of the water at the first temperature through the supply line 2. Again preferably, the flow meter 6 is configured to generate input data representative of the flow rate of the water at the first temperature through the supply line 2.

The machine 1 comprises a mixing unit 7 configured to receive and mix water at the first temperature and water at a second temperature, higher than the first temperature, so as to generate a mixture.

In addition, the machine 1 comprises a first fluid path 8 and a second fluid path 9. The first fluid path 8 and the second fluid path 9 both connect the branch point 5 of the supply line 2 to the mixing unit 7. In particular, the second fluid path 9 is in parallel to the first fluid path 8. In detail, the first fluid path 8 is configured to supply the water at the first temperature to the mixing unit 7. The second fluid path 9 is configured to supply the water at the second temperature to the mixing unit 7.

The machine 1 comprises a heating element 11 arranged along the second fluid path 9 and configured to receive the water at the first temperature from the branch point 5 and supply the water at the second temperature to the mixing unit 7. In detail, the heating element 11 may comprise a boiler configured to raise the temperature of the water from the first temperature to the second temperature, different and higher than the first.

In addition, the machine 1 comprises a first nozzle 12 and a second nozzle 13 arranged respectively along the first fluid path 8 and the second fluid path 9. These first nozzle 12 and second nozzle 13 are configured to define respectively the fluid flow rate along the first fluid path 8 and the second fluid path 9. In other words, the flow rates along the first fluid path 8 and the second fluid path 9 are fixed and defined respectively by the first nozzle 12 and the second nozzle 13.

Advantageously, it is possible to create a brewed beverage-making machine that does not present temperature sensors along the first fluid path 8 and along the second fluid path 9 downstream of the heating element 11.

It is also possible to make a machine 1 which allows to mix a volume of water at the first temperature and a volume of water at the second temperature without the use of pressure or temperature sensors at the mixing unit 7. This is advantageous since it makes the machine 1 cheaper than the brewed beverage-making machines of the known type.

In one embodiment, the machine 1 comprises a first electrovalve 14 and a second electrovalve 15 arranged respectively along the first fluid path 8 and along the second fluid path 9. In detail, the first electrovalve 14 and the second electrovalve 15 are on/off type valves and are configured to be controlled to stop and allow the passage of water along the first fluid path 8 and the second fluid path 9, respectively.

This is advantageous because, by controlling the valves individually or simultaneously, it is possible to adjust the volume of water at the first temperature and the volume of water at the second temperature supplied to the mixing unit 7 through the first fluid path 8 and the second fluid path 9.

Preferably, the first nozzle 12 is arranged along the first fluid path 8 between the first electrovalve 14 and the mixing unit 7. Also preferably, the second nozzle 13 is arranged along the second fluid path 9 between the branch point 5 and the heating element 11.

According to one aspect, the second electrovalve 15 is arranged along the second fluid path 9 between the heating element 11 and the mixing unit 7.

In one embodiment, the machine 1 comprises a control unit 16 which, in turn, comprises an acquisition module 17, a processing module 18 and an actuation module 19.

The acquisition module 17 is in signal communication with the flow meter 6 to receive input data and is configured to receive control data representative of the volume of water at the first temperature to be supplied to the supply line 2. Preferably, the control data are representative of the volume of water at the first temperature and the volume of water at the second temperature to be supplied to the mixing unit 7 respectively through the first fluid path 8 and the second fluid path 9.

The processing module 18 is placed in signal communication with the acquisition module 17 and is configured to generate a regulation signal based on the input data and the control data.

The regulation signal may be representative of the mode of operation of one or more of the pump 3, the first electrovalve 14 and the second electrovalve 15. In particular, this regulation signal may be representative of the operating time of the pump 3 or of the activation time of the first electrovalve 14 or of the second electrovalve 15.

The actuation module 19 is in signal communication with the pump 3 to send the regulation signal and adjust the volume of water at the first temperature supplied to the supply line 2 based on the regulation signal. The actuation module 19 is configured to activate and deactivate the pump 3 according to the adjustment signal to allow and interrupt the supply of water at the first temperature to the supply line 2.

Preferably, the actuation module 19 is placed in signal communication with the first electrovalve 14 and with the second electrovalve 15 to adjust the volume of water at the first temperature supplied to the mixing unit 7 through the first fluid path 8 and the volume of water at the second temperature supplied to the mixing unit 7 through the second fluid path 9 based on the regulation signal.

Also preferably, the actuation module 19 is configured to activate and deactivate the first electrovalve 14 and the second electrovalve 15 individually or simultaneously according to the adjustment signal to allow and stop the passage of water along the first fluid path 8 and the second fluid path 9 respectively.

This is advantageous since it allows the volume of water at the first temperature or at the second temperature supplied to the mixing unit 7 to be precisely adjusted by acting on the single fluid path.

In one embodiment, the actuation module 19 is configured to activate intermittently one or more of the pump 3, the first electrovalve 14 and the second electrovalve 15 based on the control signal. In detail, the actuation module 19 is configured to activate and deactivate according to an impulse train one or more of the pump 3, the first electrovalve 14 and the second electrovalve 15.

Preferably, the machine 1 comprises a brewing chamber 21 connected to the mixing unit 7 and configured to receive from said mixing unit 7 the mixture of water at the first temperature and water at the second temperature. The brewing chamber 21 is further configured to receive and contain coffee powder. In use, the coffee comes into contact with the mixture to make the brewed beverage.

In a first embodiment, the brewing chamber 21 comprises a dispensing unit connected to the mixing unit 7 and configured to receive the mixture and a filter holder that can be coupled to such a dispenser unit. In particular, the filter holder has a seat configured to receive and contain the coffee. The dispenser unit is configured to supply the mixture to the filter holder at the seat.

In a second embodiment, the brewing chamber 21 comprises a first hollow cylindrical body and a pressing body. The first cylindrical body is adapted to contain coffee. The press is connected to the mixing unit 7 to receive the mixture. In addition, the pressing body is configured to press the coffee contained within the first body and convey the mixture from the mixing unit 7 within the first body.

It is also an object of the present invention to propose a method for the preparation of brewed beverages by means of a brewed beverage-making machine 1 as described above.

According to a first embodiment, the method comprises the steps of defining a total volume of water to be supplied to the mixing unit 7 and defining a mixing volume corresponding to a fraction of the total volume of water.

To supply the total volume of water, the method comprises a step of defining a first parameter representative of the total volume of water or the time necessary for the pump 3 to supply said total volume of water.

To supply the mixing volume, the method comprises a step of defining a second parameter representative of the mixing volume or the time required for the pump 3 to supply said mixing volume.

This second parameter is representative of the time in which the first electrovalve 14 and the second electrovalve 15 are active simultaneously to supply the mixing volume to the mixing unit 7.

The first and second parameter can be defined by a number of activation pulses of the pump 3 to supply the total volume of water and the mixing volume to the mixing unit 7.

The method comprises the step of generating input data representative of water flow rate through the supply line 2. Preferably, the step of generating input data representative of the water flow rate through the supply line 2 is performed by means of the flow meter 6.

The input data is processed to determine the volume of water supplied to the supply line 2 from the pump 3 when it is activated and/or to determine the pulses provided by the pump 3.

In addition, the method comprises the steps of:
- supplying/stopping the water supply in the supply line 2 according to the first parameter and the input data;
- supplying/stopping the water supply in the first path 8 and/or the second path 9 according to one or more of the first parameter, the second parameter and the input data.

The step of supplying/stopping the water supply in the supply line 2 according to the first parameter and the input data is performed by means of the pump 3.

The step of supplying/stopping the water supply in the first path 8 and/or the second path 9 based on one or more of the first parameter, the second parameter and the input data is performed by means of the first electrovalve 14 and/or the second electrovalve 15.

According to a first operating mode, the method comprises the following steps:
- simultaneously supplying water into the supply line 2, into the first fluid path 8 and into the second fluid path 9;
- stopping the water supply in the first fluid path 8 or in the second fluid path 9 when the mixing volume has been reached;
- stopping the water supply in the fluid path still supplied and in the supply line 2 when the total volume of water has been reached.

In other words, the pump 3 and the electrovalves 14, 15 are activated simultaneously. Once the mixing unit 7 has received a volume of water equal to the mixing volume, one of the electrovalves 14, 15 is deactivated. When the total volume of water has been reached, the electrovalve not previously deactivated and the pump 3 are deactivated. According to a preferred embodiment, the electrovalve 14 is deactivated when the mixing volume has been reached and then the electrovalve 15 is deactivated when the total volume of water has been reached.

Additionally, the method comprises the step of defining a delay volume corresponding to a fraction of the total volume of water.

To supply the delay volume, the method may comprise a step of defining a third parameter representative of the delay volume or time or pulses required for the pump 3 to supply said delay volume.

This third parameter is also representative of a delay time between activation of the first electrovalve 14 and activation of the second electrovalve 15 or vice versa.

According to a second operating mode, the method comprises the following steps:
- simultaneously supplying water into the supply line 2 and into the second fluid path 9;
- supplying water into the first fluid path 8 when the delay volume has been reached;
- stopping the supply of water in the first fluid path 8 when the mixing volume has been reached;
- stopping the water supply in the second fluid path 9 and in the supply line 2 when the total volume of water has been reached.

In other words, the pump 3 and the second electrovalve 15 are activated simultaneously. Once the mixing unit 7 has received a volume of water equal to the delay volume, the first electrovalve 14 is activated. When the mixing volume has been reached, the first electrovalve 14 is deactivated, while the pump 3 and the second electrovalve 15 are kept active until the total volume of water has been reached.

In a second embodiment, the method comprises the step of defining a reference volume and a reference time necessary for the pump 3 to supply said reference volume. Furthermore, the method comprises the step of defining an interval volume corresponding to a fraction of the total volume of water and a stoppage time. The method may comprise the step of defining a fourth parameter representative of one or more of reference volume, reference time, interval volume, stoppage time, pulses required by pump 3 to supply the reference volume and/or interval volume.

In accordance with one aspect, the method comprises the steps of:
- simultaneously supplying water into the supply line 2 and into the second fluid path 9;
- if the time taken to reach the reference volume is less than the reference time, then water is also supplied into the first fluid path 8;
- stopping the water supply in the first fluid path 8 when the interval volume has been reached;
- keeping the water supply in the first fluid path 8 stopped for a time equal to the stoppage time;
- stopping the water supply in the second fluid path 9 and in the supply line 2 when the total volume of water has been reached.

The supply of water in the first path 8 can be allowed and stopped according to an impulse train based on the fourth parameter. By way of example, if the water flow rate through the supply line 2 detected by the flow meter 6 is greater than the ratio of reference volume to reference time, water will be supplied both in the first path 8 and in the second path 9. Vice versa water will only be supplied in the second path 9. When active, the water supply in the first path 8 is maintained until the interval volume has been reached, after which it is interrupted for a time equal to the stoppage time.

This is advantageous, as it makes it possible to obtain excellent brewed beverages even in cases where the edible powder, for example coffee powder, used in the preparation of the beverage has a grain size inhomogeneity.

The method that is the object of the present invention enables the mixing of a water flow at the second temperature and a water flow at the first temperature using the water flow rate through the supply line 2 as the only information calculated in real time.

This is advantageous, since the use of proportional valves and temperature or pressure sensors along the first fluid path 8 or the second fluid path 9 is rendered superfluous.

## Claims

1. A brewed beverage-making machine (1) comprising:
- a supply line (2) having a branch point (5);
- a pump (3) configured to receive water at a first temperature from an external source (4) and supply said water at the first temperature to the supply line (2);
- a flow meter (6) arranged on the supply line (2) between the pump (3) and the branch point (5);
- a mixing unit (7) configured to receive and mix the water at the first temperature with water at a second temperature higher than the first temperature, to thereby generate a mixture;
- a first fluid path (8) connecting the branch point (5) of the supply line (2) to the mixing unit (7) and configured to supply the water at the first temperature to the mixing unit (7);
- a second fluid path (9) connecting the branch point (5) of the supply line (2) to the mixing unit (7) and configured to supply the water at the second temperature to the mixing unit (7), said second fluid path (9) being in parallel with the first flow path (8);
- a heating element (11) arranged along the second flow path (9), said heating element (11) being configured to receive the water at the first temperature from the branch point (5) and supply the water at the second temperature to the mixing unit (7);
**characterized in that it** comprises a first nozzle (12) and a second nozzle (13) arranged respectively along the first fluid path (8) and the second fluid path (9), said first nozzle (12) and second nozzle (13) being able to set the flow rate of fluid along the first fluid path (8) and the second fluid path (9), respectively.

2. A brewed beverage-making machine (1) as claimed in the preceding claim, wherein the second nozzle (13) is arranged along the second fluid path (9) between the branch point (5) and the heating element (11).

3. A brewed beverage-making machine (1) as claimed in any of the preceding claims, comprising a first electrovalve (14) and a second electrovalve (15) arranged along the first fluid path (8) and the second fluid path (9) respectively, said first electrovalve (14) and second electrovalve (15) being of the on/off type and configured to be controlled to stop and allow the passage of water along the first fluid path (8) and the second fluid path (9) respectively.

4. A brewed beverage-making machine (1) as claimed in the preceding claim, wherein the second electrovalve (15) is arranged along the second fluid path (9) between the heating element (11) and the mixing unit (7).

5. A brewed beverage-making machine (1) as claimed in claim 3 or 4, wherein the first nozzle (12) is arranged along the first fluid path (8) between the first electrovalve (14) and the mixing unit (7).

6. A brewed beverage-making machine (1) as claimed in any of the preceding claims, wherein the flow meter (6) is configured to generate input data representative of the flow rate of the water at the first temperature through the supply line (2), said machine (1) comprising a control unit (16) which comprises:
- an acquisition module (17) in signal communication with the flow meter (6) to receive the input data, and configured to receive control data representative of the volume of water at the first temperature to be supplied to the supply line (2);
- a processing module (18) in signal communication with the acquisition module (17) and configured to generate a regulation signal (12) based on the input data and the control data;
- an actuation module (19) in signal communication with the pump (3) to send the regulation signal and regulate the volume of water at the first temperature supplied to the supply line (2) according to the regulation signal.

7. An brewed beverage-making machine (1) as claimed in claim 6 and in any of claims 3 to 5, wherein the control data are representative of the volume of water at the first temperature and the volume of water at the second temperature to be supplied to the mixing unit (7), said actuation module (19) being in signal communication with the first electrovalve (14) and the second electrovalve (15) to regulate the volume of water at the first temperature supplied to the mixing unit (7) through the first fluid path (8) and the volume of water at the second temperature supplied to the mixing unit (7) through the second fluid path (9) according to the regulation signal.

8. A brewed beverage-making machine (1) as claimed in claim 6 or 7, wherein the actuation module (19) is configured to intermittently actuate one or more of the pump (3), the first electrovalve (14) and the second electrovalve (15) according to the regulation signal.

9. A method of making brewed beverages using a brewed beverage-making machine (1) as claimed in any of the preceding claims, comprising the steps of:
- defining a total volume of water to be supplied to the mixing unit (7);
- defining a mixing volume corresponding to a fraction of the total volume of water;
- generating input data representative of the water flow rate through the supply line (2);
- supplying/stopping the supply of water to the supply line (2) according to the total volume of water and the input data;
- supplying/stopping the supply of water in the first path (8) and/or in the second path (9) according to the total volume of water, the mixing volume and the input data.

10. A method as claimed in the preceding claim, comprising the sequential steps of:
- simultaneously supplying water in the supply line (2), the first fluid path (8) and the second fluid path (9);
- stopping the supply of water in the first fluid path (8) or in the second fluid path (9) upon reaching the mixing volume;
- stopping the supply of water in the fluid path that is still being supplied and in the supply line (2) upon reaching the total volume of water.

11. A method as claimed in claim 9, comprising the sequential steps of:
- defining a delay volume corresponding to a fraction of the total volume of water;
- simultaneously supplying water in the supply line (2) and the second fluid path (9);
- supplying water in the first fluid path (8) upon reaching the delay volume;
- stopping the supply of water in the first fluid path (8) upon reaching the mixing volume;
- stopping the supply of water in the second fluid path (9) and in the supply line (2) upon reaching the total volume of water.

12. A method as claimed in claim 9, comprising the sequential steps of:
- defining a reference volume and a reference time interval required for the pump (3) to supply said reference volume;
- defining a range volume corresponding to a fraction of the total volume of water and a stop time interval;
- simultaneously supplying water in the supply line (2) and the second fluid path (9);
- if the time taken to reach the reference volume is less than the reference time interval, supplying water in the first fluid path (8);
- stopping the supply of water in the first fluid path (8) upon reaching the range volume;
- keeping water supply stopped in the first fluid path (8) for a period of time equal to the stop time interval;
- stopping the supply of water in the second fluid path (9) and in the supply line (2) upon reaching the total volume of water.

13. A method as claimed in any of claims 9 to 12, wherein the step of supplying/stopping the supply of water in the first path (8) and/or in the second path (9) is carried out by means of a first electrovalve (14) and a second electrovalve (15) arranged along the first fluid path (8) and the second fluid path (9) respectively, said first electrovalve (14) and second electrovalve (15) being of the on/off type and configured to be controlled to stop and allow the passage of fluid along the first fluid path (8) and the second fluid path (9) respectively.

## Patentansprüche

1. Brühgetränkemaschine (1), umfassend:
- eine Zufuhrleitung (2) mit einer Verzweigungsstelle (5);
- eine Pumpe (3), die dazu konfiguriert ist, Wasser mit einer ersten Temperatur von einer externen Quelle (4) zu empfangen und das Wasser mit der ersten Temperatur der Zufuhrleitung (2) zuzuführen;
- einen Durchflussmesser (6), der an der Zufuhrleitung (2) zwischen der Pumpe (3) und der Verzweigungsstelle (5) eingerichtet ist;
- eine Mischeinheit (7), die dazu konfiguriert ist, das Wasser mit der ersten Temperatur mit Wasser mit einer zweiten Temperatur, die höher als die erste Temperatur ist, zu empfangen und zu mischen, um dadurch eine Mischung zu erzeugen;
- einen ersten Fluidpfad (8), der die Verzweigungsstelle (5) der Zufuhrleitung (2) mit der Mischeinheit (7) verbindet und dazu konfiguriert ist, das Wasser der Mischeinheit (7) mit der ersten Temperatur zuzuführen;
- einen zweiten Fluidpfad (9), der die Verzweigungsstelle (5) der Zufuhrleitung (2) mit der Mischeinheit (7) verbindet und dazu konfiguriert ist, das Wasser zu der Mischeinheit (7) mit der zweiten Temperatur zuzuführen, wobei der zweite Fluidpfad (9) parallel zu dem ersten Strömungspfad (8) ist;
- ein Heizelement (11), das entlang des zweiten Strömungspfads (9) eingerichtet ist, wobei das Heizelement (11) konfiguriert ist, um das Wasser mit der ersten Temperatur von der Verzweigungsstelle (5) aufzunehmen und das Wasser der Mischeinheit (7) mit der zweiten Temperatur zuzuführen;
**dadurch gekennzeichnet, dass es** eine erste Düse (12) und eine zweite Düse (13) umfasst, die jeweils entlang des ersten Fluidpfads (8) und des zweiten Fluidpfads (9) eingerichtet sind, wobei die erste Düse (12) und die zweite Düse (13) in der Lage sind, die Strömungsrate des Fluids entlang des ersten Fluidpfads (8) bzw. des zweiten Fluidpfads (9) einzustellen.

2. Brühgetränkemaschine (1) nach dem vorstehenden Anspruch, wobei die zweite Düse (13) entlang des zweiten Fluidpfads (9) zwischen der Verzweigungsstelle (5) und dem Heizelement (11) eingerichtet ist.

3. Brühgetränkemaschine (1) nach einem der vorstehenden Ansprüche, die ein erstes Elektroventil (14) und ein zweites Elektroventil (15) umfasst, die entlang des ersten Fluidpfads (8) bzw. des zweiten Fluidpfads (9) eingerichtet sind, wobei das erste Elektroventil (14) und das zweite Elektroventil (15) vom Ein/Aus-Typ und dazu konfiguriert sind, gesteuert zu werden, um den Durchgang von Wasser entlang des ersten Fluidpfads (8) bzw. des zweiten Fluidpfads (9) zu stoppen und zu erlauben.

4. Brühgetränkemaschine (1) nach dem vorstehenden Anspruch, wobei das zweite Elektroventil (15) entlang des zweiten Fluidpfads (9) zwischen dem Heizelement (11) und der Mischeinheit (7) eingerichtet ist.

5. Brühgetränkemaschine (1) nach Anspruch 3 oder 4, wobei die erste Düse (12) entlang des ersten Fluidpfads (8) zwischen dem ersten Elektroventil (14) und der Mischeinheit (7) eingerichtet ist.

6. Brühgetränkemaschine (1) nach einem der vorstehenden Ansprüche, wobei der Durchflussmesser (6) dazu konfiguriert ist, Eingangsdaten zu erzeugen, die für die Durchflussrate des Wassers mit der ersten Temperatur durch die Zufuhrleitung (2) repräsentativ sind, wobei die Maschine (1) eine Steuereinheit (16) umfasst, die umfasst:
- ein Erhebungsmodul (17), das mit dem Durchflussmesser (6) in Signalkommunikation steht, um die Eingangsdaten zu empfangen, und dazu konfiguriert ist, Steuerdaten zu empfangen, die für das Wasservolumen mit der ersten Temperatur, das der Zufuhrleitung (2) zugeführt werden soll, repräsentativ sind;
- ein Verarbeitungsmodul (18) in Signalkommunikation mit dem Erhebungsmodul (17) und dazu konfiguriert, ein Regelungssignal (12) basierend auf den Eingangsdaten und den Steuerdaten zu erzeugen;
- ein Betätigungsmodul (19) in Signalverbindung mit der Pumpe (3), um das Regelungssignal zu senden und das Wasservolumen mit der ersten Temperatur, das der Zufuhrleitung (2) zugeführt wird, gemäß dem Regelungssignal zu regeln.

7. Brühgetränkemaschine (1) nach Anspruch 6 und einem der Ansprüche 3 bis 5, wobei die Steuerdaten für das Wasservolumen mit der ersten Temperatur und das Wasservolumen der zweiten Temperatur, das der Mischeinheit (7) zugeführt werden soll, repräsentativ sind, wobei das Betätigungsmodul (19) in Signalverbindung mit dem ersten Elektroventil (14) und dem zweiten Elektroventil (15) steht, um das Wasservolumen mit der ersten Temperatur, das der Mischeinheit (7) durch den ersten Fluidpfad (8) zugeführt wird, und das Wasservolumen mit der zweiten Temperatur, das der Mischeinheit (7) durch den zweiten Fluidpfad (9) zugeführt wird, gemäß dem Regelungssignal zu regeln.

8. Brühgetränkemaschine (1) nach Anspruch 6 oder 7, wobei das Betätigungsmodul (19) dazu konfiguriert ist, intermittierend eines oder mehrere von der Pumpe (3), dem ersten Elektroventil (14) und dem zweiten Elektroventil (15) gemäß dem Regelungssignal zu betätigen.

9. Verfahren zum Zubereiten gebrühter Getränke unter Verwendung einer Brühgetränkemaschine (1) nach einem der vorstehenden Ansprüche, das die folgenden Schritte umfasst:
- Definieren eines Wassergesamtvolumens, das der Mischeinheit (7) zugeführt werden soll;
- Definieren eines Mischvolumens, das einem Bruchteil des Wassergesamtvolumens entspricht;
- Erzeugen von Eingabedaten, die für die Wasserdurchflussrate durch die Zufuhrleitung (2) repräsentativ sind;
- Zuführen/Stoppen der Wasserzufuhr zu der Zufuhrleitung (2) gemäß dem Gesamtvolumen des Wassers und den Eingabedaten;
- Zuführen/Stoppen der Wasserzufuhr in dem ersten Pfad (8) und/oder in den zweiten Pfad (9) gemäß dem Wassergesamtvolumen, dem Mischvolumen und den Eingabedaten.

10. Verfahren nach dem vorstehenden Anspruch, das die zusätzlichen Schritte umfasst zum:
- gleichzeitigen Zuführen von Wasser in die Zufuhrleitung (2), den ersten Fluidpfad (8) und den zweiten Fluidpfad (9);
- Stoppen der Wasserzufuhr in den ersten Fluidpfad (8) oder in den zweiten Fluidpfad (9) beim Erreichen des Mischvolumens;
- Stoppen der Zufuhr von Wasser in den Fluidpfad, dem noch zugeführt wird, und in die Zufuhrleitung (2) bei Erreichen des gesamten Wasservolumens.

11. Verfahren nach Anspruch 9, das die sequenziellen Schritte umfasst zum:
- Definieren eines Verzögerungsvolumens, das einem Bruchteil des Wassergesamtvolumens entspricht;
- gleichzeitigen Zuführen von Wasser in die Zufuhrleitung (2) und den zweiten Fluidpfad (9);
- Zuführen von Wasser in den ersten Fluidpfad (8) beim Erreichen des Verzögerungsvolumens;
- Stoppen der Wasserzufuhr in den ersten Fluidpfad (8) beim Erreichen des Mischvolumens;
- Stoppen der Wasserzufuhr in den zweiten Fluidpfad (9) und in die Zufuhrleitung (2) bei Erreichen des Gesamtwasservolumens.

12. Verfahren nach Anspruch 9, das die sequenziellen Schritte umfasst zum:
- Definieren eines Referenzvolumens und eines Referenzzeitintervalls, die für die Pumpe (3) erforderlich sind, um das Referenzvolumen zu liefern;
- Definieren eines Bereichsvolumens, das einem Bruchteil des Wassergesamtvolumens entspricht, und eines Stoppzeitintervalls;
- gleichzeitigen Zuführen von Wasser in die Zufuhrleitung (2) und den zweiten Fluidpfad (9);
- falls die Zeit, die benötigt wird, um das Referenzvolumen zu erreichen, kürzer als das Referenzzeitintervall ist, Zuführen von Wasser in den ersten Fluidpfad (8);
- Stoppen der Wasserzufuhr in den ersten Fluidpfad (8) beim Erreichen des Bereichsvolumens;
- Gestoppthalten der Wasserzufuhr in den ersten Fluidpfad (8) für einen Zeitraum, der gleich dem Stoppzeitintervall ist;
- Stoppen der Wasserzufuhr in den zweiten Fluidpfad (9) und in die Zufuhrleitung (2) bei Erreichen des Gesamtwasservolumens.

13. Verfahren nach einem der Ansprüche 9 bis 12, wobei der Schritt des Zuführens/Stoppens der Wasserzufuhr in den ersten Pfad (8) und/oder in den zweiten Pfad (9) mittels eines ersten Elektroventils (14) und eines zweiten Elektroventils (15), die entlang des ersten Fluidpfads (8) bzw. des zweiten Fluidpfads (9) eingerichtet sind, durchgeführt wird, wobei das erste Elektroventil (14) und das zweite Elektroventil (15) vom Ein/Aus-Typ und dazu konfiguriert sind, gesteuert zu werden, um den Durchgang von Fluid entlang des ersten Fluidpfads (8) bzw. des zweiten Fluidpfads (9) zu stoppen und zu erlauben.

## Revendications

1. Machine (1) de préparation de boissons infusées comprenant :
- une conduite d'alimentation (2) ayant un point de branchement (5) ;
- une pompe (3) configurée pour recevoir de l'eau à une première température à partir d'une source externe (4) et fournir ladite eau à la première température à la conduite d'alimentation (2) ;
- un débitmètre (6) agencé sur la conduite d'alimentation (2) entre la pompe (3) et le point de branchement (5) ;
- une unité de mélange (7) configurée pour recevoir et mélanger l'eau à la première température avec de l'eau à une seconde température plus élevée que la première température, pour générer ainsi un mélange ;
- un premier trajet (8) de fluide reliant le point de branchement (5) de la conduite d'alimentation (2) à l'unité de mélange (7) et configuré pour fournir l'eau à la première température à l'unité de mélange (7) ;
- un second trajet (9) de fluide reliant le point de branchement (5) de la conduite d'alimentation (2) à l'unité de mélange (7) et configuré pour fournir l'eau à la seconde température à l'unité de mélange (7), ledit second trajet (9) de fluide étant parallèle au premier trajet (8) d'écoulement ;
- un élément chauffant (11) agencé le long du second trajet (9) d'écoulement, ledit élément chauffant (11) étant configuré pour recevoir l'eau à la première température à partir du point de branchement (5) et fournir l'eau à la seconde température à l'unité de mélange (7) ;
**caractérisée en ce qu'elle** comprend une première buse (12) et une seconde buse (13) agencées respectivement le long du premier trajet (8) de fluide et du second trajet (9) de fluide, ladite première buse (12) et ladite seconde buse (13) étant aptes à régler le débit d'écoulement de fluide le long du premier trajet (8) de fluide et du second trajet (9) de fluide, respectivement.

2. Machine (1) de préparation de boissons infusées selon la revendication précédente, dans laquelle la seconde buse (13) est agencée le long du second trajet (9) de fluide entre le point de branchement (5) et l'élément chauffant (11).

3. Machine (1) de préparation de boissons infusées selon l'une quelconque des revendications précédentes, comprenant une première électrovanne (14) et une seconde électrovanne (15) agencées le long du premier trajet (8) de fluide et du second trajet (9) de fluide respectivement, ladite première électrovanne (14) et ladite seconde électrovanne (15) étant de type marche/arrêt et configurées pour être commandées pour arrêter et permettre le passage de l'eau le long du premier trajet (8) de fluide et du second trajet (9) de fluide respectivement.

4. Machine (1) de préparation de boissons infusées selon la revendication précédente, dans laquelle la seconde électrovanne (15) est agencée le long du second trajet (9) de fluide entre l'élément chauffant (11) et l'unité de mélange (7).

5. Machine (1) de préparation de boissons infusées selon la revendication 3 ou 4, dans laquelle la première buse (12) est agencée le long du premier trajet (8) de fluide entre la première électrovanne (14) et l'unité de mélange (7).

6. Machine (1) de préparation de boissons infusées selon l'une quelconque des revendications précédentes, dans laquelle le débitmètre (6) est configuré pour générer des données d'entrée représentatives du débit d'écoulement de l'eau à la première température à travers la conduite d'alimentation (2), ladite machine (1) comprenant une unité de commande (16) qui comprend :
- un module d'acquisition (17) en communication de signal avec le débitmètre (6) pour recevoir les données d'entrée, et configuré pour recevoir des données de commande représentatives du volume d'eau à la première température à fournir à la conduite d'alimentation (2) ;
- un module de traitement (18) en communication de signal avec le module d'acquisition (17) et configuré pour générer un signal de régulation (12) sur la base des données d'entrée et des données de commande ;
- un module d'actionnement (19) en communication de signal avec la pompe (3) pour envoyer le signal de régulation et réguler le volume d'eau à la première température fourni à la conduite d'alimentation (2) selon le signal de régulation.

7. Machine (1) de préparation de boissons infusées selon la revendication 6 et l'une quelconque des revendications 3 à 5, dans laquelle les données de commande sont représentatives du volume d'eau à la première température et du volume d'eau à la seconde température à fournir à l'unité de mélange (7), ledit module d'actionnement (19) étant en communication de signal avec la première électrovanne (14) et la seconde électrovanne (15) pour réguler le volume d'eau à la première température fourni à l'unité de mélange (7) à travers le premier trajet (8) de fluide et le volume d'eau à la seconde température fourni à l'unité de mélange (7) à travers le second trajet (9) de fluide selon le signal de régulation.

8. Machine (1) de préparation de boissons infusées selon la revendication 6 ou 7, dans laquelle le module d'actionnement (19) est configuré pour actionner de manière intermittente une ou plusieurs parmi la pompe (3), la première électrovanne (14) et la seconde électrovanne (15) selon le signal de régulation.

9. Procédé de fabrication de boissons infusées à l'aide d'une machine (1) de préparation de boissons infusées selon l'une quelconque des revendications précédentes, comprenant les étapes consistant à :
- définir un volume total d'eau à fournir à l'unité de mélange (7) ;
- définir un volume de mélange correspondant à une fraction du volume total d'eau ;
- générer des données d'entrée représentatives du débit d'écoulement d'eau à travers la conduite d'alimentation (2) ;
- fournir/arrêter l'alimentation en eau de la conduite d'alimentation (2) selon le volume total d'eau et les données d'entrée ;
- fournir/arrêter l'alimentation en eau dans le premier trajet (8) et/ou dans le second trajet (9) selon le volume total d'eau, le volume de mélange et les données d'entrée.

10. Procédé selon la revendication précédente, comprenant les étapes séquentielles consistant à :
- fournir simultanément de l'eau dans la conduite d'alimentation (2), le premier trajet (8) de fluide et le second trajet (9) de fluide ;
- arrêter l'alimentation en eau dans le premier trajet (8) de fluide ou dans le second trajet (9) de fluide lorsque le volume de mélange est atteint ;
- arrêter l'alimentation en eau dans le trajet de fluide qui est encore alimenté et dans la conduite d'alimentation (2) lorsque le volume total d'eau est atteint.

11. Procédé selon la revendication 9, comprenant les étapes séquentielles consistant à :
- définir un volume de retard correspondant à une fraction du volume total d'eau ;
- fournir simultanément de l'eau dans la conduite d'alimentation (2) et le second trajet (9) de fluide ;
- fournir de l'eau dans le premier trajet (8) de fluide lorsque le volume de retard est atteint ;
- arrêter l'alimentation en eau dans le premier trajet (8) de fluide lorsque le volume de mélange est atteint ;
- arrêter l'alimentation en eau dans le second trajet (9) de fluide et dans la conduite d'alimentation (2) lorsque le volume total d'eau est atteint.

12. Procédé selon la revendication 9, comprenant les étapes séquentielles consistant à :
- définir un volume de référence et un intervalle de temps de référence requis pour que la pompe (3) fournisse ledit volume de référence ;
- définir un volume de portée correspondant à une fraction du volume total d'eau et un intervalle de temps d'arrêt ;
- fournir simultanément de l'eau dans la conduite d'alimentation (2) et le second trajet (9) de fluide ;
- si le temps mis pour atteindre le volume de référence est inférieur à l'intervalle de temps de référence, fournir de l'eau dans le premier trajet (8) de fluide ;
- arrêter l'alimentation en eau dans le premier trajet (8) de fluide lorsque le volume de portée est atteint ;
- maintenir l'alimentation en eau à l'arrêt dans le premier trajet de fluide (8) pendant une période de temps égale à l'intervalle de temps d'arrêt ;
- arrêter l'alimentation en eau dans le second trajet (9) de fluide et dans la conduite d'alimentation (2) lorsque le volume total d'eau est atteint.

13. Procédé selon l'une quelconque des revendications 9 à 12, dans lequel l'étape consistant à fournir/arrêter l'alimentation en eau dans le premier trajet (8) et/ou dans le second trajet (9) est effectuée au moyen d'une première électrovanne (14) et d'une seconde électrovanne (15) agencées le long du premier trajet (8) de fluide et du second trajet (9) de fluide respectivement, ladite première électrovanne (14) et ladite seconde électrovanne (15) étant de type marche/arrêt et configurées pour être commandées pour arrêter et permettre le passage de fluide le long du premier trajet (8) de fluide et du second trajet (9) de fluide respectivement.
